# EUROPÄISCHE PATENTSCHRIFT

(11) **EP 3 794 704 B1**
(45) Veröffentlichungstag und Bekanntmachung des Hinweises auf die Patenterteilung: **21.10.2026**
(21) Anmeldenummer: 19725118.4
(22) Anmeldetag: 16.05.2019
(51) Int. Cl.: H02J 7/00, H01M 10/42, H01M 10/48

(54) **ENERGIEVERSORGUNGSSYSTEM**
ENERGY SUPPLY SYSTEM
SYSTÈME DE FOURNITURE D'ÉNERGIE

(30) Priorität: 17.05.2018 DE 102018111913
(43) Veröffentlichungstag der Anmeldung: 24.03.2021
(73) Patentinhaber: VINCORION Power Systems GmbH, 86972 Altenstadt (DE)
(72) Erfinder: HADERSBECK, Franz, 86972 Schwabniederhofen (DE)
(74) Vertreter: Aurigium Leischner & Luthe
(86) Internationale Anmeldenummer: PCT/EP2019/062617
(87) Internationale Veröffentlichungsnummer: WO 2019/219810

(56) Entgegenhaltungen:
- WO-A1-2017/158568
- WO-A1-2018/059267
- DE-A1- 102011 081 573
- DE-A1- 102015 219 170
- DE-U1- 212017 000 146
- US-A1- 2015 037 617

## Beschreibung

Die Erfindung betrifft ein Energieversorgungssystem zum Versorgen zumindest eines Verbrauchers mit elektrischer Energie, insbesondere ein portables, modulares Energieversorgungssystem zum mobilen Einsatz.

Portable modulare Energieversorgungsplattformen können verschiedene Energiequellen, wie beispielsweise Stromerzeugeraggregate oder Photovoltaik, sowie bestehende Netze etc. zusammenführen, überschüssige Energie speichern und bedarfsbezogen Verbrauchern zur Verfügung stellen. Solche Systeme können beispielsweise aus einem zentralen Umrichter-/Verteilermodul mit optionalen Zusatzmodulen aus unterschiedlichen Bauformen oder einem auf die Anwendung angepassten Komplettsystem bestehen. Dabei können einzelne Module unterschiedlicher Bauformen über verschiedene Schnittstellen miteinander verbunden sein oder werden. Üblicherweise arbeiten solche Systeme mit Klein- und Kleinstspannung, damit sie gefahrlos von Laien bedient werden können. Dies begrenzt jedoch die Systemleistung oder führt zu sehr hohen Strömen in der Schnittstelle. Eine solche Lösung ist z. B. aus DE 10 2012 101 800 bekannt.

Die WO 2018/059267 A1 offenbart einen Stromversorgungsschrank mit übereinander angeordneten Modulen, mit zum Herausführen von Leistungsleitungen und/oder Signalleitungen dienen-den, im laufenden Betrieb austauschbaren Komponenten in Gestalt von Steckern und Buchsen, und mit Fixiereinrichtungen in Gestalt von Vorsprüngen und Vertiefungen.

Die DE 10 2015 219 170 A1 zeigt ein Batteriesystem, das mindestens eine Batterievorrichtung und mindestens eine Steuervorrichtung zur Steuerung und Kontrolle der mindestens einen Batterievorrichtung umfasst, wobei jede der Vorrichtungen mindestens ein Gehäuseelement und mindestens eine Steckvorrichtung aufweisen, um die Vorrichtungen derart zusammen zu stecken, dass die mindestens eine Batterievorrichtung und die mindestens eine Steuervorrichtung in ei-nem durch die Gehäuseelemente gebildeten Gehäuse angeordnet sind.

Die WO 2017/158568 A1 offenbart ein Batteriemodul und ein modulares Batteriesystem, das eine Anzahl von Modulen umfasst, die mittels komplementärer elektrischer Verbindungseinrichtungen miteinander verbunden sind, wobei zur Verbindung der Module keine Werkzeuge benötigt werden.

Die DE 10 2011 081 573 A1 betrifft ein Baukastensystem zur Herstellung eines elektrischen Energiespeichers mit mehreren baulich zusammengefassten und elektrisch untereinander verschalteten Speichermodulen, wobei Gehäuse der Speichermodule korrespondierende Formschlusselemente zum Verbinden der Module miteinander aufweisen.

Die US 2015/037617 A1 offenbart eine elektrochemische Zelle mit einem selektiv leitenden Gehäuse, wobei die Zelle Verriegelungsmerkmale zum Stapeln mit weiteren Zellen zu einer zusammengesetzten Batterie aufweist.

Ziel der Erfindung ist die Bereitstellung eines solchen Energieversorgungssystems, welches auch im Bereich der Niederspannung gefahrlos von Laien zusammengestellt und bedient werden kann. Daher wird beispielsweise eine Schnittstelle zwischen den einzelnen Funktionsmodulen des Energieversorgungssystems vorgesehen, welche Sicherheitseinrichtungen und -schaltungen enthalten kann, die einen Energiefluss zwischen den Modulen erst bei einer sicheren Verbindung zulassen und beispielsweise einen hohen Berührschutz gewährleisten können. Vor diesem Hintergrund wird mit dem hier vorgestellten Ansatz ein Energieversorgungssystem gemäß dem Hauptanspruch vorgestellt. Vorteilhafte Ausgestaltungen und Weiterbildungen der Erfindung ergeben sich aus den nachfolgenden Unteransprüchen.

Gemäß Ausführungsformen kann insbesondere eine portable modulare Energieversorgungsplattform oder anders ausgedrückt ein portables und modulares Energieversorgungssystem bereitgestellt werden. Dabei können beispielsweise je nach Einsatzanforderungen eine variable Anzahl und Art von Modulen für unterschiedliche Funktionen unter Verwendung systemweit einheitlicher Schnittstellen zu dem Energieversorgungssystem kombiniert werden. Die Schnittstellen arbeiten dabei mit Niederspannung, um Ströme bei höheren Leistungen gering zu halten und mit geringeren Leiterquerschnitten arbeiten zu können. Dabei können automatisierte Trennschalter und ein Berührschutz für ausreichende Sicherheit zur Bedienung durch Laien sorgen. Ein solches Energieversorgungssystem kann in vielen Bereichen von Energieversorgungen eingesetzt werden, bei denen diverse Energiequellen und Energiespeicher unterschiedliche Verbraucher versorgen sollen, insbesondere auch militärische Energieversorgungsanlagen.

Vorteilhafterweise kann gemäß Ausführungsformen insbesondere eine Plattform zur Vereinfachung und Vereinheitlichung eines Systemaufbaus mobiler und portabler Energiesysteme unter Berücksichtigung verschiedener Eingangs-, Ausgangs- und Speichermanagementanforderungen bereitgestellt werden. Durch eine Kombination verschiedener Module können unterschiedliche Anwendungsszenarien bedient werden, wie zum Beispiel Spitzenlastausgleich, unterbrechungsfreie Stromversorgung (USV), Netzumformer etc. Energieversorgungssysteme können durch einen solchen modularen Aufbau insbesondere flexibel und schnell an verschiedene Einsatzbedingungen angepasst und bei Bedarf erweitert oder verkleinert werden. Der Energiefluss wird dabei beispielsweise automatisch durch ein Energiemanagement gesteuert, welches beispielsweise das Zuschalten von Primärenergiequellen, Ladung der Speichermodule und Abschalten unwichtiger Verbraucher steuert. Durch eine einheitliche Schnittstelleneinrichtung an allen Modulen können Transport sowie Inbetriebnahme vereinfacht werden und kann notwendiges Zubehör reduziert werden. Ein solches System kann skalierbar und kombinierbar, einfach zu verkabeln und raumeffizient transportierbar sein. Komplettsysteme können flexibel an verschiedene Energiequellen bzw. Verbraucher angepasst werden und können für einen Transport ohne Hebegerät geeignet sein. Auch können die einzelnen Module eines solchen Energiesystems für den Transport einheitlich verpackt werden und zudem braucht keine Vielzahl von Zubehörkabeln vorgehalten zu werden. Somit kann auch eine Komplexität des Systems reduziert und eine Bedienung für fachfremde Personen erleichtert werden.

Es wird ein Energieversorgungssystem zum Versorgen zumindest eines Verbrauchers und/oder eines Speichermoduls mit elektrischer Energie vorgestellt, wobei das Energieversorgungssystem eine variable Anzahl von portabel ausgeführten Funktionsmodulen aufweist, wobei jedes der Funktionsmodule eine einheitliche Schnittstelleneinrichtung zum elektrischen Verbinden der Funktionsmodule untereinander aufweist. Dabei sind die einheitlichen Schnittstelleneinrichtungen ausgebildet, um eine Niederspannung an den einheitlichen Schnittstelleneinrichtungen durch zumindest eine mechanische und/oder elektrische Schutzeinrichtung automatisch herzustellen und/oder zu trennen. Zudem sind die einheitlichen Schnittstelleneinrichtungen ausgebildet, um bei einem Kupplungsvorgang zunächst ein mechanischer Schutz gegen Berührung und Verschmutzung manuell und/oder automatisch zu entfernen und anschließend der Kontakt der elektrischen Leistungs- und Signalverbindungen herzustellen.

Das Energieversorgungssystem kann für einen mobilen Einsatz vorgesehen sein. Dabei kann ein Standort, Betriebsort oder Einsatzort des Energieversorgungssystems verlagert werden. Bei dem Verbraucher kann es sich um einen elektrischen Verbraucher oder eine elektrische Last handeln. Es können unterschiedliche Funktionsmodule für verschiedene Funktionen vorgesehen sein. Die Anzahl der Funktionsmodule kann für einen Einsatz des Energieversorgungssystems abhängig von Einsatzbedingungen variiert werden oder variabel festgelegt werden. Auch kann Art oder Typ der Funktionsmodule für einen Einsatz des Energieversorgungssystems abhängig von Einsatzbedingungen variiert werden oder variabel festgelegt werden. Die einheitliche Schnittstelleneinrichtung kann in zumindest einem Abschnitt des Funktionsmoduls angeordnet sein. Die einheitliche Schnittstelleneinrichtung kann als eine in das Funktionsmodul integrierte Schnittstelleneinrichtung ausgeführt sein. Eine einheitliche Ausführung der Schnittstelleneinrichtung kann eine einheitliche geometrische Ausformung und zusätzlich oder alternativ eine einheitliche Art, Anzahl und zusätzlich oder alternativ Position von Anschlüssen betreffen. Zudem sind die einheitlichen Schnittstelleneinrichtungen ausgebildet, um eine Niederspannung an den einheitlichen Schnittstelleneinrichtungen durch zumindest eine mechanische und/oder elektrische Schutzeinrichtung automatische herzustellen und/oder zu trennen. Auf diese Weise lässt sich sehr einfach sicherstellen, dass für einen Benutzer des Energieversorgungssystems keine gefährlichen Spannungen an für diesen Benutzer zugänglichen oder kontaktierbaren Stellen auftreten, die den Komfort und/oder die Sicherheit der Verwendung des Energieversorgungssystems beeinträchtigen könnten.

Auch sind die einheitlichen Schnittstelleneinrichtungen ausgebildet, um bei einem Kupplungsvorgang zunächst ein mechanischer Schutz gegen Berührung und Verschmutzung manuell und/oder automatisch zu entfernen und anschließend der Kontakt der elektrischen Leistungs- und Signalverbindungen herzustellen. Nach Aufbau des Berührschutzes durch die beteiligten Kupplungsgehäuse werden hierzu beispielsweise elektrische Endkontakte ("Laste Mate First Break") geschlossen, welche die Verriegelung der Trennschalter für die Zwischenkreisspannung freigibt. Somit ist ein Zuschalten der Zwischenkreisspannung vorteilhaft nur bei vollständig gestecktem Stecker möglich. Beim Trennen der Verbindung erfolgt günstigerweise ein Abschalten der Zwischenkreisspannung durch die elektrische Verriegelung bei einem minimalen Lösen der Steckverbindung.

Denkbar ist ferner auch eine Ausführungsform des hier vorgeschlagenen Ansatzes, bei der die einheitlichen Schnittstelleneinrichtungen ausgebildet sind, um eine Niederspannung an den einheitlichen Schnittstelleneinrichtungen zusätzlich durch je zumindest eine elektromagnetische und/oder softwaregesteuerte Schutzeinrichtung automatische herzustellen und/oder zu trennen. Eine solche Ausführungsform bietet den Vorteil einer sehr sicheren und zuverlässigen Schutzeinrichtung, um die Benutzung einer solchen Ausführungsform des Energieversorgungssystems zu erleichtern oder ganz zu gewährleisten.

Auch können gemäß einer weiteren Ausführungsform eines Energieversorgungssystems die einheitlichen Schnittstelleneinrichtungen ausgebildet sein, um eine Zu- und/oder Abschaltung zusätzlich softwaregesteuert nach Aufbau der Kommunikation mit einem anderen Funktionsmodul und/oder einer mechanischer Verriegelungseinheit vorzunehmen. Beim Trennen der Verbindung erfolgt hierbei beispielsweise ein Abschalten der Zwischenkreisspannung beim Öffnen der mechanischen Verrieglung oder softwaregesteuert nach manueller Befehlseingabe noch bevor der Stecker bewegt wird. Eine solche Ausführungsform bietet den Vorteil, durch die Kommunikation mit dem anderen Funktionsmodul oder der mechanischen Verriegelungseinheit sicherstellen zu können, dass auch das Funktionsmodul oder die mechanische Verriegelungseinheit in einem Zustand sind, der eine Kopplung mit dem Funktionsmodul zulässt, sodass eine Fehlfunktion oder Beschädigung von Komponenten des Energie Versorgungssystems möglichst vermieden werden kann.

Gemäß einer weiteren Ausführungsform eines Energieversorgungssystems, das eine diverse Anzahl von Funktionsmodulen umfasst, welche mit einer Spannung an den einheitlichen Schnittstelleneinrichtungen über einer Niederspannung betrieben werden, können die einheitlichen Schnittstelleneinrichtungen ausgebildet sein, um im laufenden Betrieb mit anderen einheitlichen Schnittstelleneinrichtungen verschaltet zu werden. In seiner Zusammenstellung kann das Energieversorgungssystem auf diese Weise geändert werden und in Abhängigkeit von der Zusammenstellung und einem intelligenten Energiemanagement auf den Verbraucher zugeschnittene Leistungsversorgung sicherstellten, z. B. für gepulste Lasten oder zum Ausgleich von Lastspitzen und -senken. Eine solche Ausführungsform des hier vorgestellten Ansatzes bietet den Vorteil, auch im laufenden Betrieb beispielsweise weitere Energiespeicher dem Energieversorgungssystem zu zu schalten, ohne dass beispielsweise eine Energieabgabe von dem Energieversorgungssystem unterbrochen werden braucht. Hierdurch lässt sich eine Versorgungssicherheit eines Verbrauchers, gerade bei längeren Einsatzszenarien als ursprünglich geplant, vorteilhaft sicherstellen.

Denkbar ist ferner eine Ausführungsform des hier vorgeschlagenen Ansatzes, bei der es sich bei den Funktionsmodulen um zumindest ein Eingangsmodul zum Erzeugen und/oder Aufnehmen elektrischer Energie und zumindest ein Speichermodul zum Speichern elektrischer Energie oder zumindest ein Eingangsmodul und zumindest ein Ausgangsmodul zum Ausgeben elektrischer Energie oder zumindest ein Speichermodul und zumindest ein Ausgangsmodul handelt. Eine solche Ausführungsform des hier vorgeschlagenen Ansatzes bietet den Vorteil, dass das Energieversorgungssystem bereits in einem Grundzustand zur Aufnahme von elektrischer Energie vorbereitet ist, sodass während des Betriebs des Energieversorgungssystems beispielsweise sehr schnell ein Nachladen des Speichers ermöglicht wird.

Auch können gemäß einer anderen Ausführungsform des hier vorgestellten Ansatzes ein oder mehrere Funktionsmodule unterschiedliche Speicher- und Leistungscharakteristiken aufweisen, insbesondere wobei eine Energiemanagementeinheit vorgesehen ist, die ausgebildet ist, um einen Energiefluss in Abhängigkeit der benötigten Ausgangsleistung, der verfügbaren Primärenergiequellen, dem Ladezustand etwaiger Speicher und der jeweils verwendeten Module zu steuern. Eine solche Ausführungsform bietet den Vorteil, unterschiedliche, zur Verfügung stehende Funktionsmodule gemeinsam in das Energieversorgungssystem integrieren zu können, sodass ein sehr flexibler, je nach Verfügbarkeit der einzelnen Funktionsmodule mögliche Aufbau des Energieversorgungssystems möglich ist.

Gemäß einer Ausführungsform können die Funktionsmodule eine einheitliche Bauform mit einer einheitlichen Grundfläche und zusätzlich oder alternativ mit zumindest einer einheitlichen Abmessung aufweisen. Die Grundfläche eines Funktionsmoduls kann eine Standfläche des Funktionsmoduls repräsentieren. Eine solche Ausführungsform bietet den Vorteil, dass ein logistischer Versorgungsaufwand und beispielsweise ein Kraftstoffverbrauch reduziert werden können, da die Funktionsmodule gleicher Bauform über einheitliche Schnittstellen miteinander verbunden sind oder werden.

Auch können die Funktionsmodule aufeinander gestapelt anordenbar oder angeordnet sein. Dabei können die Funktionsmodule direkt aufeinander aufliegen. Insbesondere können die Funktionsmodule bei Betrieb des Energieversorgungssystems aufeinander gestapelt angeordnet sein. Eine solche Ausführungsform bietet den Vorteil, dass durch den gestapelten Aufbau eine räumliche Anordnung der Funktionsmodule insbesondere beim Transport effizienter gestaltet werden kann, wobei auch zusätzliche Verpackungen entfallen können. Während des Betriebs kann der gestapelte Aufbau über die in die Funktionsmodule integrierte und einheitliche Schnittstelleneinrichtung eine direkte Verbindung der Module untereinander ermöglichen, ohne den Bedarf weiteren Zubehörs. Auch durch den gestapelten Aufbau können Transport sowie Inbetriebnahme vereinfacht und notwendiges Zubehör minimiert werden.

Ferner kann das Energieversorgungssystem ein Trägergehäuse zum Aufnehmen der Funktionsmodule aufweisen. Hierbei können die Funktionsmodule in das Trägergehäuse einschiebbar sein. Dabei kann das Trägergehäuse ausgebildet sein, um die Schnittstelleneinrichtungen der Funktionsmodule miteinander zu verbinden. Genauer gesagt kann das Trägergehäuse Gegenstücke zu den Schnittstelleneinrichtungen aufweisen, wobei die Gegenstücke mit den Schnittstelleneinrichtungen verbindbar ausgeführt sein können. Eine solche Ausführungsform bietet den Vorteil, dass eine stabile und robuste Anordnung, insbesondere Stapelung, der Funktionsmodule ermöglicht werden kann.

Gemäß einer Ausführungsform können die Funktionsmodule zumindest ein Eingangsmodul zum Erzeugen und zusätzlich oder alternativ zum Aufnehmen elektrischer Energie und zusätzlich oder alternativ zumindest ein Speichermodul zum Speichern elektrischer Energie und zusätzlich oder alternativ zumindest ein Ausgangsmodul zum Ausgeben elektrischer Energie aufweisen. Eine solche Ausführungsform bietet den Vorteil, dass zum Bereitstellen elektrischer Energie im Feld unterschiedliche Energiequellen, beispielsweise alternative Energien, und Speichertechnologie in ein Energiesystem mit eingebunden werden können, um je nach Anforderungen und Gegebenheiten am Einsatzort und flexible Weise eine geeignete Zusammenstellung von Funktionsmodulen für das Energieversorgungssystem verwenden zu können. Es können somit auch beispielsweise ein Anwendungsfall, in dem ein Speichermodul und ein Eingangsmodul zum Laden eines Energiespeichers verwendet werden, und ein anderer Anwendungsfall abgedeckt werden, in dem ein Ausgangsmodul einen Verbraucher aus einem Speichermodul versorgt. Auch kann eine Kombination aus einem Eingangsmodul und einem Ausgangsmodul ohne Speichermodul als reiner Umformer eingesetzt werden.

Auch kann die Schnittstelleneinrichtung ausgebildet sein, um die Funktionsmodule signalübertragungsfähig miteinander zu verbinden. Hierbei kann die Schnittstelleneinrichtung ausgebildet sein, um über die Schnittstelleneinrichtung empfangene Signale dem Funktionsmodul bereitzustellen und zusätzlich oder alternativ zu benachbarten Funktionsmodulen weiterzuleiten. Eine solche Ausführungsform bietet den Vorteil, dass Leistungssignale sowie Informationssignale in jedem Funktionsmodul mittels der Schnittstelleneinrichtungen durchgeschleift und zusätzlich oder alternativ abgegriffen werden können. Somit kann ein Energiefluss sowie Informationsfluss in alle Richtungen zwischen den Funktionsmodulen ermöglicht werden.

Insbesondere kann die Schnittstelleneinrichtung einen Buchsenabschnitt und einen Steckerabschnitt aufweisen. Alternativ kann die Schnittstelleneinrichtung einen Buchsenabschnitt und einen Ausnehmungsabschnitt aufweisen, in dem eine mit dem Funktionsmodul verbundene elektrische Leitung mit einem Stecker aufnehmbar oder aufgenommen sein kann. In einer Parkposition der Schnittstelleneinrichtung kann die mit dem Funktionsmodul verbundene elektrische Leitung mit dem Stecker in dem Ausnehmungsabschnitt aufgenommen sein. In einer Betriebsposition der Schnittstelleneinrichtung kann die mit dem Funktionsmodul verbundene elektrische Leitung des Steckers mit dem Buchsenabschnitt eines benachbarten Funktionsmoduls verbunden sein. Eine solche Ausführungsform bietet den Vorteil, dass eine einfache und zuverlässige elektrische bzw. signalübertragungsfähige Verbindung zwischen Funktionsmodulen hergestellt werden kann.

Ferner kann die Schnittstelleneinrichtung ausgebildet sein, um das Funktionsmodul an einen Fluidkreislauf anzuschließen. Dazu kann die Schnittstelleneinrichtung einen Fluideinlass und einen Fluidauslass aufweisen. Bei dem Fluidkreislauf kann es sich um einen Kühlkreislauf handeln. Eine solche Ausführungsform bietet den Vorteil, dass eine zuverlässige Kühlung der Funktionsmodule ermöglicht werden kann, wobei ein Anschluss an einen Kühlkreislauf auf einheitliche und einfache Weise über die Schnittstelleneinrichtung erreicht werden kann.

Zudem kann das Energieversorgungssystem und zusätzlich oder alternativ jedes der Funktionsmodule eine Fixierungseinrichtung zum Fixieren der Funktionsmodule relativ zueinander aufweisen. Eine solche Ausführungsform bietet den Vorteil, dass ein Verrutschen von Funktionsmodulen relativ zueinander auch bei Bewegungen des Energieversorgungssystems zuverlässig verhindert werden kann.

Auch kann jedes der Funktionsmodule ein Steuergerät aufweisen. Hierbei kann das Steuergerät ausgebildet sein, um einen Betrieb des Energieversorgungssystems über die Schnittstelleneinrichtung des Funktionsmoduls und zusätzlich oder alternativ über die Schnittstelleneinrichtung zumindest eines weiteren Funktionsmoduls zu steuern. Eine solche Ausführungsform bietet den Vorteil, dass insbesondere digitale Steuerungen in jedem Funktionsmodul ein Energiemanagement in jeder Kombination von Modulen ermöglichen können. Des Weiteren können die einheitlichen Schnittstelleneinrichtungen bzw. Kommunikationsschnittstellen einen autonomen Betrieb des Energieversorgungssystems durch die Kommunikation der einzelnen Steuergeräte der Funktionsmodule bzw. Modulsteuerungen ermöglichen.

Ein Ausführungsbeispiel der Erfindung ist in den Zeichnungen rein schematisch dargestellt und wird nachfolgend näher beschrieben. Es zeigt
Fig. 1 eine schematische Darstellung eines Energieversorgungssystems gemäß einem Ausführungsbeispiel;
Fig. 2 eine schematische Darstellung eines Energieversorgungssystems gemäß einem Ausführungsbeispiel;
Fig. 3 eine schematische Darstellung eines Energieversorgungssystems gemäß einem Ausführungsbeispiel; und
Fig. 4 eine schematische Darstellung eines Energieversorgungssystems gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

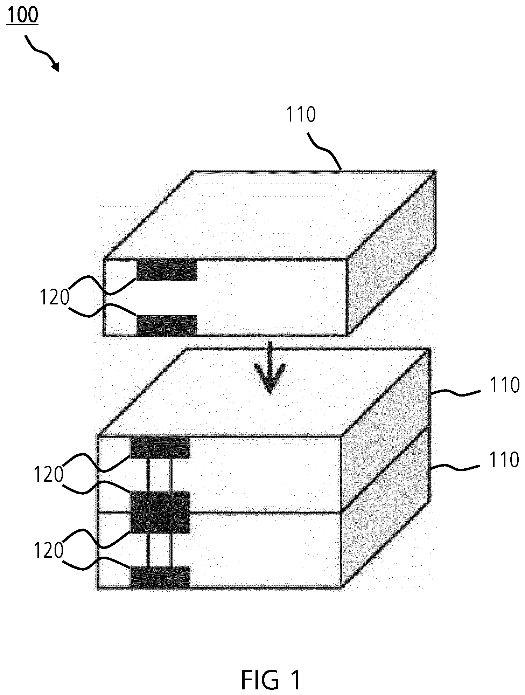

Fig. 1 zeigt eine schematische Darstellung eines Energieversorgungssystems 100 gemäß einem Ausführungsbeispiel. Das Energieversorgungssystem 100 ist für einen Einsatz bzw. Einsatz mit Standortverlagerung vorgesehen. Dabei ist das Energieversorgungssystem 100 ausgebildet, um zumindest einen elektrischen Verbraucher mit elektrischer Energie zu versorgen.

Das Energieversorgungssystem 100 weist eine variable Anzahl von portabel ausgeführten Funktionsmodulen 110 auf. Die Funktionsmodule 110 weisen gemäß einem Ausführungsbeispiel zumindest ein Eingangsmodul zum Erzeugen und/oder Aufnehmen elektrischer Energie, zumindest ein Speichermodul zum Speichern elektrischer Energie und/oder zumindest ein Ausgangsmodul zum Ausgeben elektrischer Energie auf. In der Darstellung von Fig. 1 sind lediglich beispielhaft drei Funktionsmodule 110 dargestellt. Beispielsweise ist eines der Funktionsmodule 110 gemäß dem hier dargestellten Ausführungsbeispiel ein Eingangsmodul, insbesondere mit Photovoltaik, einem Stromerzeuger, einem Netzeingang und/oder dergleichen. Ein weiteres der Funktionsmodule 110 ist hierbei beispielsweise ein Speichermodul, insbesondere mit einem Superkondensator, einer Lithium-Ionen-Batterie, einer Bleibatterie und/oder dergleichen. Noch ein weiteres der Funktionsmodule 110 ist hierbei beispielsweise ein Ausgangsmodul, insbesondere mit 230 Volt Wechselstrom mit 50 Hertz, 24 Volt Gleichstrom, 120 Volt Wechselstrom mit 60 Hertz oder dergleichen.

Jedes der Funktionsmodule 110 weist eine einheitliche Schnittstelleneinrichtung 120 auf. Jede der einheitlichen Schnittstelleneinrichtungen 120 ist ausgebildet, um eine elektrische Verbindung der Funktionsmodule 110 untereinander zu ermöglichen bzw. herzustellen. Die Schnittstelleneinrichtungen 120 sind ausgebildet, um die Funktionsmodule 110 signalübertragungsfähig miteinander zu verbinden. Dabei ist jede Schnittstelleneinrichtung 120 ausgebildet, um empfangene Signale dem zugehörigen Funktionsmodul 110 bereitzustellen und/oder zu benachbarten Funktionsmodulen 110 weiterzuleiten. Somit ist jede einheitliche Schnittstelleneinrichtung 120 ausgebildet, um eine Durchschleifung und/oder einen Abgriff von Kommunikations- und Leistungsverbindungen zwischen den Funktionsmodulen 110 zu ermöglichen.

Die Funktionsmodule 110 weisen gemäß dem hier dargestellten Ausführungsbeispiel eine einheitliche Bauform auf. Genauer gesagt weisen die Funktionsmodule 110 eine einheitliche Grundfläche bzw. Standfläche auf. Allgemein gesagt weisen die Funktionsmodule 110 zumindest eine einheitliche Abmessung auf. In der Darstellung von Fig. 1 sind die Funktionsmodule 110 aufeinander gestapelt angeordnet, wobei sind zwei der Funktionsmodule 110 direkt aufeinander gestapelt angeordnet und mittels der Schnittstelleneinrichtungen 120 signalübertragungsfähig miteinander verbunden sind, wobei ein drittes der Funktionsmodule 110 im Begriff ist, auf die anderen zwei Funktionsmodule 110 gestapelt zu werden, wie es durch einen Pfeil in Fig. 1 veranschaulicht ist.

Somit sind tragbare, eigenständige Funktionsmodule 110 mit einheitlicher Bauform aufeinander gestapelt und über integrierte und einheitliche Schnittstelleneinrichtungen 120 bzw. Leistungs- und Kommunikationsschnittstellen frei kombinierbar miteinander verbunden. Gemäß einem anderen Ausführungsbeispiel kann das Energieversorgungssystem 100 eine andere Anzahl und/oder Art von Funktionsmodulen 110 aufweisen. Die Funktionsmodule 110 sind über die Schnittstelleneinrichtungen 120 elektrisch verbunden.

Gemäß einem Ausführungsbeispiel kann das Energieversorgungssystem 100 ein Trägergehäuse zum Aufnehmen der Funktionsmodule 110 aufweisen. Dabei können die Funktionsmodule 110 des Energieversorgungssystems 100 eingeschoben sein. Optional kann das Trägergehäuse ausgebildet sein, um die Schnittstelleneinrichtungen 120 der Funktionsmodule 110 miteinander zu verbinden. Insbesondere kann das Trägergehäuse in jedem Einschubfach eine einheitliche Schnittstelleneinrichtung 120 oder ein mit der einheitlichen Schnittstelleneinrichtung 120 kompatibles Gegenstück aufweisen, um die Verbindung unter den Funktionsmodulen 110 bereitzustellen. Auch kann gemäß einem Ausführungsbeispiel das Energieversorgungssystem 100 und/oder jedes der Funktionsmodule 110 eine Fixierungseinrichtung zum Fixieren der Funktionsmodule 110 relativ zueinander aufweisen. So kann eine mechanische Verriegelung erreicht werden, um ein unabsichtliches Verrutschen der Funktionsmodule 110 zu verhindern.

Gemäß einem weiteren Ausführungsbeispiel können die Schnittstelleneinrichtungen 120 der Funktionsmodule 110 auch ausgebildet sein, um die Funktionsmodule 110 an einen Fluidkreislauf anzuschließen. Der Fluidkreislauf kann hierbei als ein Kühlkreislauf ausgeführt sein. Die Schnittstelleneinrichtungen 120 können hierzu Fluidanschlüsse aufweisen.

Ferner kann gemäß einem Ausführungsbeispiel jedes der Funktionsmodule 110 ein Steuergerät aufweisen. Jedes Steuergerät ist ausgebildet, um einen Betrieb des Energieversorgungssystems 100 über die Schnittstelleneinrichtung 120 des Funktionsmoduls 110 und/oder die Schnittstelleneinrichtung 120 zumindest eines weiteren Funktionsmoduls 110 zu steuern. Für einen autonomen Betrieb des Energieversorgungssystems 100 können die Steuergeräte der Funktionsmodule 110 miteinander kommunizieren.

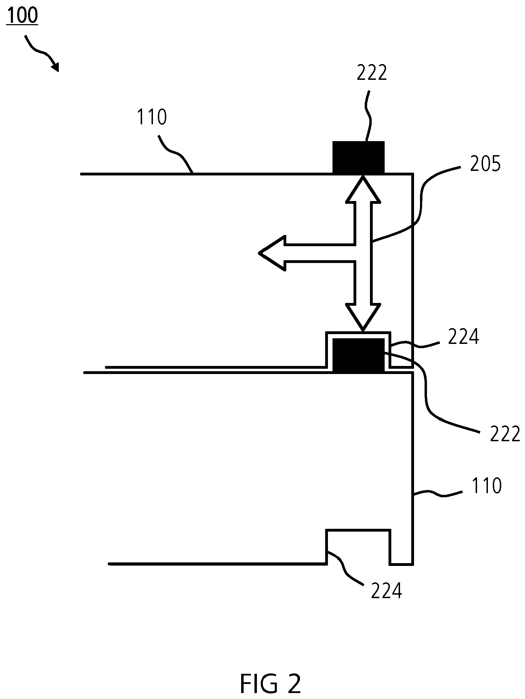

Fig. 2 zeigt eine schematische Darstellung eines Energieversorgungssystems 100 gemäß einem Ausführungsbeispiel. Hierbei entspricht das Energieversorgungssystem 100 dem Energieversorgungssystem aus Fig. 1 mit Ausnahme dessen, dass beispielhaft lediglich zwei Funktionsmodule 110 gezeigt sind und die Schnittstelleneinrichtungen genauer dargestellt und/oder anders ausgeführt sind.

Die Funktionsmodule 110 sind in der Darstellung von Fig. 2 direkt aufeinander gestapelt angeordnet. Jede einheitliche Schnittstelleneinrichtung jedes der Funktionsmodule 110 weist einen Steckerabschnitt 222 bzw. Stecker-Teil und einen Buchsenabschnitt 224 bzw. Buchsen-Teil auf. Der Steckerabschnitt 222 und der Buchsenabschnitt 224 sind an voneinander abgewandten Seiten jedes Funktionsmoduls 110 angeordnet. Gemäß dem hier dargestellten Ausführungsbeispiel ist lediglich beispielhaft der Steckerabschnitt 222 im Bereich eines Deckels des Funktionsmoduls 110 angeordnet und ist lediglich beispielhaft der Buchsenabschnitt 224 im Bereich eines Bodens des Funktionsmoduls 110 angeordnet. In einem gestapelten Zustand der Funktionsmodule 110 erfolgt eine jeweils Kopplung eines Steckerabschnittes 222 eines ersten Funktionsmoduls 110 mit einem Buchsenabschnitt 224 eines zweiten Funktionsmoduls 110. Somit wird mittels der Steckerabschnitte 222 und der Buchsenabschnitte 224 der einheitlichen Schnittstelleneinrichtungen eine signalübertragungsfähige Verbindung der Funktionsmodule 110 durch Aufeinandersetzen von Funktionsmodule 110 hergestellt.

In der Darstellung von Fig. 2 ist ferner symbolisch ein Signalfluss 205 in Gestalt eines bidirektionalen oder multidirektionalen Energie- und Informationsflusses veranschaulicht. Der Signalfluss 205 ermöglicht für jedes Funktionsmodul 110 einen bidirektionalen Energie- und Informationsfluss zwischen Steckerabschnitt 222 und Buchsenabschnitt 224 der einheitlichen Schnittstelleneinrichtung sowie einen Energie- und Informationsfluss in das Funktionsmodul 110.

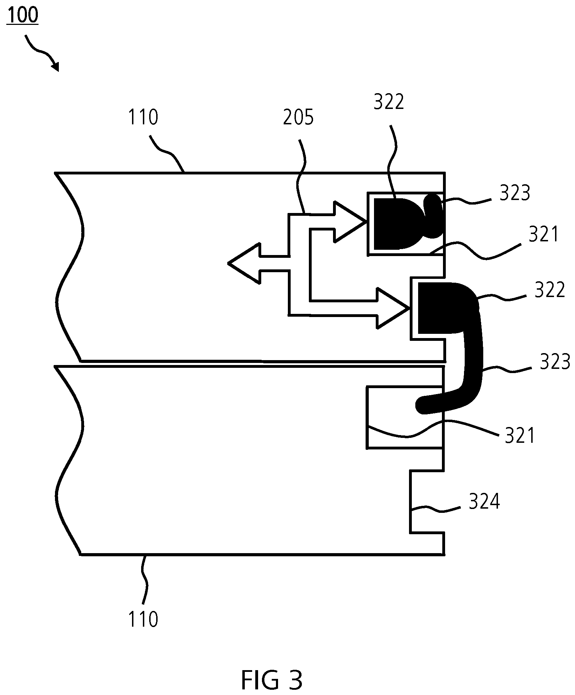

Fig. 3 zeigt eine schematische Darstellung eines Energieversorgungssystems 100 gemäß einem Ausführungsbeispiel. Dabei entspricht das Energieversorgungssystem 100 dem Energieversorgungssystem aus Fig. 2 mit Ausnahme dessen, dass die Schnittstelleneinrichtungen anders ausgeführt sind. Hierbei weist jede Schnittstelleneinrichtung einen Ausnehmungsabschnitt 321 mit einer elektrischen Leitung 323 und einem Stecker 322 und einen Buchsenabschnitt 324 auf. In dem Ausnehmungsabschnitt 321 ist die elektrische Leitung 323 mit dem Stecker 322 aufnehmbar oder aufgenommen. Die elektrische Leitung 323 ist mit dem Funktionsmodul 110 verbunden.

In der Darstellung von Fig. 3 ist bei einem ersten der Funktionsmodule 110 die elektrische Leitung 323 mit dem Stecker 322 in dem Ausnehmungsabschnitt 321 aufgenommen, wobei bei einem zweiten der Funktionsmodule 110 die elektrische Leitung 323 mit dem Stecker 322 in den Buchsenabschnitt 324 des ersten der Funktionsmodule 110 eingesteckt ist. Somit weist jede einheitliche Schnittstelleneinrichtung gemäß dem in Fig. 3 dargestellten Ausführungsbeispiel einen beweglichen Stecker 322 an einer kurzen, festangebundenen Leitung 323 auf. Somit ist vorteilhafterweise auch eine zuverlässige elektrische Verbindung zwischen Funktionsmodulen 110 bei grob verschmutzen Boden- und Deckelflächen derselben möglich.

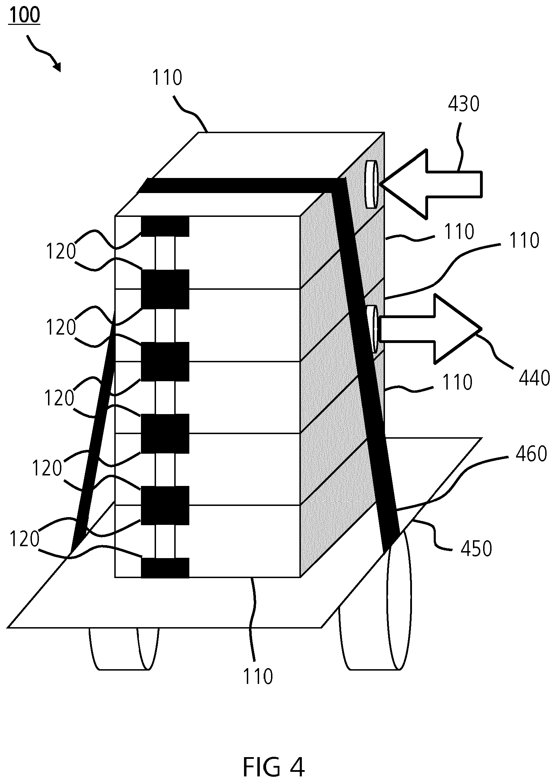

Fig. 4 zeigt eine schematische Darstellung eines Energieversorgungssystems 100 gemäß einem Ausführungsbeispiel. Hierbei entspricht das Energieversorgungssystem 100 dem Energieversorgungssystem aus Fig. 1 mit Ausnahme dessen, dass lediglich beispielhaft fünf Funktionsmodule 110 gezeigt sind, die auf einem Transportfahrzeug 450 bzw. beispielsweise einem Anhänger 450 fixiert sind.

Bei den Funktionsmodulen 110 handelt es sich gemäß dem hier dargestellten Ausführungsbeispiel von oben nach unten in Fig. 4 beispielhaft um ein Eingangsmodul 110, ein Speichermodul 110, ein Ausgangsmodul 110 und zwei weitere Speichermodule 110. Ein Energiefluss bezüglich des Energieversorgungssystems 100 ist symbolisch durch Pfeile in Gestalt eines Energiezuflusses 430 von einem Netzanschluss zu dem Eingangsmodul 110 und eines Energieabflusses 440 von dem Ausgangsmodul 110 an ist einen Verbraucher veranschaulicht.

Die Funktionsmodule 110 sind aufeinander gestapelt angeordnet. Hierbei können die einheitlichen Schnittstelleneinrichtungen 120 derselben miteinander verbunden sein. Das Energieversorgungssystem 100 ist auf das Transportfahrzeug 450 verladen und mittels eines Spanngurtes 460 oder dergleichen auf dem Transportfahrzeug 450 fixiert.

Anders ausgedrückt zeigt Fig. 4 einen möglichen Aufbau des Energieversorgungssystems 100 und dessen Verladung auf einen Anhänger 450 mit einem handelsüblichen Spanngurt 460. Beispielhaft kann das Energieversorgungssystem 100 zum Spitzenlastausgleich eingesetzt werden. Dazu sind beispielsweise ein Eingangsmodul 110 zum Anschluss an ein kommerzielles Stromnetz, drei Superkondensator-Module 110 und ein Ausgangsmodul 110 aufeinander gestapelt und über die gemeinsamen Schnittstelleneinrichtungen 120 miteinander verbunden.

Unter Bezugnahme auf die vorstehend genannten Figuren wird nachfolgend ein Ausführungsbeispiel zusammenfassend und mit anderen Worten erläutert. Das Energieversorgungssystem 100 repräsentiert ein portables und modulares Energieversorgungssystem mit der Möglichkeit zur Einbindung verschiedener Energiequellen wie z. B. Photovoltaik, Stromerzeuger, Stromnetze, usw., Energiespeicher wie z. B. Lithium-Ionen Batterien, Bleibatterien, Superkondensatoren, usw. und Verbraucher wie z. B. mit Batterielader, Inselnetz, usw. durch Kombination entsprechender Funktionsmodule 110 insbesondere im militärischen Feld- und Außeneinsatz. Hierbei ermöglicht eine mechanische bzw. geometrische Gestaltung der Bauform der einzelnen Funktionsmodule 110 einen gestapelten Aufbau und die Funktionsmodule 110 sind über die integrierten und einheitlichen Schnittstelleneinrichtungen 120 bzw. 222, 224 bzw. 321, 322, 323, 324 in Gestalt von elektrischen Leistungs- und Kommunikationsschnittstellen miteinander verbindbar. Dabei können Leistungs- und Kommunikationsleitungen sowohl vom darunterliegenden zum darüber liegenden Funktionsmodul 110 durchgeschleift als auch vom dazwischenliegenden Funktionsmodul 110 abgegriffen werden. Die Funktionsmodule 110 sind für Aufbau und Transport ohne Verwendung von Hebezeug bzw. durch Muskelkraft ausgelegt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Energieversorgungssystem (100) zum Versorgen zumindest eines Verbrauchers und/oder eines Speichermoduls mit elektrischer Energie, mit einer variablen Anzahl von portabel ausgeführten Funktionsmodulen (110), wobei jedes der Funktionsmodule (110) eine einheitliche Schnittstelleneinrichtung (120; 222, 224; 321, 322, 323, 324) zum elektrischen Verbinden der Funktionsmodule (110) untereinander aufweist, **dadurch gekennzeichnet, dass** die einheitlichen Schnittstelleneinrichtungen (120; 222, 224; 321, 322, 323, 324) ausgebildet sind, um eine Niederspannung an den einheitlichen Schnittstelleneinrichtungen (120; 222, 224; 321, 322, 323, 324) durch zumindest eine mechanische und/oder elektrische Schutzeinrichtung automatisch herzustellen und/oder zu trennen, wobei die einheitlichen Schnittstelleneinrichtungen (120; 222, 224; 321, 322, 323, 324) ausgebildet sind, um bei einem Kupplungsvorgang zunächst einen mechanischen Schutz gegen Berührung und Verschmutzung manuell und/oder automatisch zu entfernen und anschließend den Kontakt der elektrischen Leistungs- und Signalverbindungen herzustellen.

2. Energieversorgungssystem (100) gemäß Anspruch 1, **dadurch gekennzeichnet, dass** die einheitlichen Schnittstelleneinrichtungen (120; 222, 224; 321, 322, 323, 324) ausgebildet sind, um eine Niederspannung an den einheitlichen Schnittstelleneinrichtungen (120; 222, 224; 321, 322, 323, 324) zusätzlich durch je zumindest eine elektromagnetische und/oder softwaregesteuerte Schutzeinrichtung automatische herzustellen und/oder zu trennen.

3. Energieversorgungssystem (100) gemäß einem der Ansprüche 1 bis 2, **dadurch gekennzeichnet, dass** die einheitlichen Schnittstelleneinrichtungen (120; 222, 224; 321, 322, 323, 324) ausgebildet sind, um eine Zu- und/oder Abschaltung zusätzlich softwaregesteuert nach Aufbau der Kommunikation mit einem anderen Funktionsmodul (110) und/oder einer mechanischer Verriegelungseinheit vorzunehmen.

4. Energieversorgungssystem (100) gemäß einem der vorangegangenen Ansprüche, das eine diverse Anzahl von Funktionsmodulen (110) umfasst, welche mit einer Spannung an den einheitlichen Schnittstelleneinrichtungen (120; 222, 224; 321, 322, 323, 324) über einer Niederspannung betrieben werden, **dadurch gekennzeichnet, dass** die einheitlichen Schnittstelleneinrichtungen (120; 222, 224; 321, 322, 323, 324) ausgebildet sind, um im laufenden Betrieb mit anderen einheitlichen Schnittstelleneinrichtungen (120; 222, 224; 321, 322, 323, 324) verschaltet zu werden.

5. Energieversorgungssystem (100) gemäß einem der vorangegangenen Ansprüche, **dadurch gekennzeichnet, dass** es sich bei den Funktionsmodulen (110) um zumindest ein Eingangsmodul zum Erzeugen und/oder Aufnehmen elektrischer Energie und zumindest ein Speichermodul zum Speichern elektrischer Energie oder zumindest ein Eingangsmodul und zumindest ein Ausgangsmodul zum Ausgeben elektrischer Energie oder zumindest ein Speichermodul und zumindest ein Ausgangsmodul handelt.

6. Energieversorgungssystem (100) gemäß einem der vorangegangenen Ansprüche, **dadurch gekennzeichnet, dass** ein oder mehrere Funktionsmodule (110) unterschiedliche Speicher- und Leistungscharakteristiken aufweisen, insbesondere wobei eine Energiemanagementeinheit vorgesehen ist, die ausgebildet ist, um einen Energiefluss in Abhängigkeit der benötigten Ausgangsleistung, der verfügbaren Primärenergiequellen, dem Ladezustand etwaiger Speicher und der jeweils verwendeten Module zu steuern.

7. Energieversorgungssystem (100) gemäß einem der vorangegangenen Ansprüche, **dadurch gekennzeichnet, dass** die Funktionsmodule (110) eine einheitliche Bauform mit einer einheitlichen Grundfläche und/oder zumindest einer einheitlichen Abmessung aufweisen und/oder dass die Funktionsmodule (110) aufeinander gestapelt anordenbar oder angeordnet sind.

8. Energieversorgungssystem (100) gemäß einem der vorangegangenen Ansprüche, **gekennzeichnet durch** ein Trägergehäuse zum Aufnehmen der Funktionsmodule (110), wobei die Funktionsmodule (110) in das Trägergehäuse einschiebbar sind, wobei das Trägergehäuse ausgebildet ist, um die Schnittstelleneinrichtungen (120; 222, 224; 321, 322, 323, 324) der Funktionsmodule (110) miteinander zu verbinden.

9. Energieversorgungssystem (100) gemäß einem der vorangegangenen Ansprüche, **dadurch gekennzeichnet, dass** die Schnittstelleneinrichtung (120; 222, 224; 321, 322, 323, 324) ausgebildet ist, um die Funktionsmodule (110) signalübertragungsfähig miteinander zu verbinden, wobei die Schnittstelleneinrichtung (120; 222, 224; 321, 322, 323, 324) ausgebildet ist, um über die Schnittstelleneinrichtung (120; 222, 224; 321, 322, 323, 324) empfangene Signale dem Funktionsmodul (110) bereitzustellen und/oder zu benachbarten Funktionsmodulen (110) weiterzuleiten.

10. Energieversorgungssystem (100) gemäß einem der vorangegangenen Ansprüche, **dadurch gekennzeichnet, dass** die Schnittstelleneinrichtung (120) einen Buchsenabschnitt (224) und einen Steckerabschnitt (222) aufweist oder einen Buchsenabschnitt (324) und einen Ausnehmungsabschnitt (321) aufweist, in dem eine mit dem Funktionsmodul (110) verbundene elektrische Leitung (323) mit einem Stecker (322) aufnehmbar oder aufgenommen ist.

11. Energieversorgungssystem (100) gemäß einem der vorangegangenen Ansprüche, **dadurch gekennzeichnet, dass** die Schnittstelleneinrichtung (120; 222, 224; 321, 322, 323, 324) ausgebildet ist, um das Funktionsmodul (110) an einen Fluidkreislauf anzuschließen.

12. Energieversorgungssystem (100) gemäß einem der vorangegangenen Ansprüche, **dadurch gekennzeichnet, dass** das Energieversorgungssystem (100) und/oder jedes der Funktionsmodule (110) eine Fixierungseinrichtung zum Fixieren der Funktionsmodule (110) relativ zueinander aufweist.

13. Energieversorgungssystem (100) gemäß einem der vorangegangenen Ansprüche, **dadurch gekennzeichnet, dass** jedes der Funktionsmodule (110) ein Steuergerät aufweist, wobei das Steuergerät ausgebildet ist, um einen Betrieb des Energieversorgungssystems (100) über die Schnittstelleneinrichtung (120; 222, 224; 321, 322, 323, 324) des Funktionsmoduls (110) und/oder die Schnittstelleneinrichtung (120; 222, 224; 321, 322, 323, 324) zumindest eines weiteren Funktionsmoduls (110) zu steuern.

## Claims

1. Energy supply system (100) for supplying electrical energy to at least one load and/or one storage module, comprising a variable number of functional modules (110) in a portable configuration, each of the functional modules (110) having a standardised interface device (120; 222, 224; 321, 322, 323, 324) for electrically connecting the functional modules (110) to one another, **characterised in that** the standardised interface devices (120; 222, 224; 321, 322, 323, 324) are designed to automatically establish and/or disconnect a low-voltage connection at the standardised interface devices (120; 222, 224; 321, 322, 323, 324) via at least one mechanical and/or electrical protective device, whereby the standardised interface devices (120; 222, 224; 321, 322, 323, 324) are designed such that, during a coupling operation, mechanical protection against contact and contamination is first removed manually and/or automatically, and the electrical power and signal connections are subsequently established.

2. Energy supply system (100) according to claim 1, **characterised in that** the standardised interface devices (120; 222, 224; 321, 322, 323, 324) are designed to establish a low voltage at the standardised interface devices (120; 222, 224; 321, 322, 323, 324) automatically via at least one electromagnetic and/or software-controlled protective device each.

3. Energy supply system (100) according to any one of claims 1 to 2, **characterised in that** the uniform interface devices (120; 222, 224; 321, 322, 323, 324) are configured to establish and/or disconnect a connection, additionally in a software-controlled manner, following the establishment of communication with another functional module (110) and/or a mechanical locking unit.

4. Energy supply system (100) according to any one of the preceding claims, comprising a variable number of functional modules (110) which are supplied with a voltage at the standardised interface devices (120; 222, 224; 321, 322, 323, 324) at a low voltage, **characterised in that** the standardised interface devices (120; 222, 224; 321, 322, 323, 324) are designed to be interconnected with other standardised interface devices (120; 222, 224; 321, 322, 323, 324) during operation.

5. Energy supply system (100) according to any one of the preceding claims, **characterised in that** the functional modules (110) comprise at least one input module for generating and/or receiving electrical energy and at least one storage module for storing electrical energy, or at least one input module and at least one output module for supplying electrical energy, or at least one storage module and at least one output module.

6. Energy supply system (100) according to any one of the preceding claims, **characterised in that** one or more functional modules (110) have different storage and power characteristics, in particular wherein an energy management unit is provided which is configured to control an energy flow as a function of the required output power, the available primary energy sources, the state of charge of any storage devices, and the modules currently in use.

7. Energy supply system (100) according to any one of the preceding claims, **characterised in that** the functional modules (110) have a uniform design with a uniform footprint and/or at least one uniform dimension, and/or **in that** the functional modules (110) can be arranged or are arranged in a stacked configuration.

8. Energy supply system (100) according to any one of the preceding claims, **characterised by** a carrier housing for accommodating the functional modules (110), wherein the functional modules (110) can be slid into the carrier housing, wherein the carrier housing is designed to connect the interface devices (120; 222, 224; 321, 322, 323, 324) of the functional modules (110) with one another.

9. Energy supply system (100) according to any one of the preceding claims, **characterised in that** the interface means (120; 222, 224; 321, 322, 323, 324) is configured to connect the functional modules (110) to one another in a manner that permits signal transmission, wherein the interface means (120; 222, 224; 321, 322, 323, 324) is configured to transmit signals received via the interface means (120; 222, 224; 321, 322, 323, 324) to the functional module (110) and/or to forward them to neighbouring functional modules (110).

10. Energy supply system (100) according to any one of the preceding claims, **characterised in that** the interface device (120) comprises a socket section (224) and a plug section (222), or comprises a socket section (324) and a recess section (321), into which an electrical cable (323) connected to the functional module (110) can be inserted or is inserted via a plug (322).

11. Energy supply system (100) according to any one of the preceding claims, **characterised in that** the interface device (120; 222, 224; 321, 322, 323, 324) is configured to connect the functional module (110) to a fluid circuit.

12. Energy supply system (100) according to any one of the preceding claims, **characterised in that** the power supply system (100) and/or each of the functional modules (110) comprises a fixing device for fixing the functional modules (110) relative to one another.

13. Energy supply system (100) according to any one of the preceding claims, **characterised in that** each of the functional modules (110) comprises a control unit, wherein the control unit is configured to control the operation of the power supply system (100) via the interface means (120; 222, 224; 321, 322, 323, 324) of the functional module (110) and/or the interface means (120; 222, 224; 321, 322, 323, 324) of at least one further functional module (110).

## Revendications

1. Système d'alimentation en énergie (100) destiné à alimenter en énergie électrique au moins un consommateur et/ou un module de stockage, comprenant un nombre variable de modules fonctionnels (110) de conception portable, chacun des modules fonctionnels (110) comportant un dispositif d'interface uniforme (120 ; 222, 224 ; 321, 322, 323, 324) pour relier électriquement les modules fonctionnels (110) entre eux, **caractérisé en ce que** les dispositifs d'interface uniformes (120 ; 222, 224 ; 321, 322, 323, 324) sont conçus pour établir et/ou interrompre automatiquement une basse tension au niveau des dispositifs d'interface uniformes (120 ; 222, 224 ; 321, 322, 323, 324) par au moins un dispositif de protection mécanique et/ou électrique, les dispositifs d'interface uniformes (120 ; 222, 224 ; 321, 322, 323, 324) sont conçus pour, lors d'une opération d'accouplement, lever d'abord manuellement et/ou automatiquement une protection mécanique contre les contacts accidentels et l'encrassement, puis établir le contact des liaisons électriques de puissance et de signal.

2. Système d'alimentation en énergie (100) selon la revendication 1, **caractérisé en ce que** les dispositifs d'interface uniformes (120 ; 222, 224 ; 321, 322, 323, 324) sont conçus pour établir automatiquement une basse tension au niveau des dispositifs d'interface uniformes (120 ; 222, 224 ; 321, 322, 323, 324) automatiquement, en plus, au moyen d'au moins un dispositif de protection électromagnétique et/ou commandé par logiciel.

3. Système d'alimentation en énergie (100) selon l'une des revendications 1 à 2, **caractérisé en ce que** les dispositifs d'interface uniformes (120 ; 222, 224 ; 321, 322, 323, 324) sont conçus pour effectuer une mise en service et/ou une mise hors service de manière supplémentaire, commandée par logiciel, après établissement de la communication avec un autre module fonctionnel (110) et/ou une unité de verrouillage mécanique.

4. Système d'alimentation en énergie (100) selon l'une des revendications précédentes, comprenant un nombre variable de modules fonctionnels (110) qui sont alimentés en tension au niveau des dispositifs d'interface uniformes (120 ; 222, 224 ; 321, 322, 323, 324) via une basse tension, **caractérisé en ce que** les dispositifs d'interface uniformes (120 ; 222, 224 ; 321, 322, 323, 324) sont conçus pour être interconnectés, en cours de fonctionnement, avec d'autres dispositifs d'interface uniformes (120 ; 222, 224 ; 321, 322, 323, 324).

5. Système d'alimentation en énergie (100) selon l'une des revendications précédentes, **caractérisé en ce que** les modules fonctionnels (110) comprennent au moins un module d'entrée destiné à produire et/ou à recevoir de l'énergie électrique et au moins un module de stockage destiné à stocker de l'énergie électrique, ou au moins un module d'entrée et au moins un module de sortie destiné à fournir de l'énergie électrique, ou au moins un module de stockage et au moins un module de sortie.

6. Système d'alimentation en énergie (100) selon l'une des revendications précédentes, **caractérisé en ce qu'**un ou plusieurs modules fonctionnels (110) présentent des caractéristiques de stockage et de puissance différentes, une unité de gestion de l'énergie étant notamment prévue, laquelle est conçue pour commander un flux d'énergie en fonction de la puissance de sortie requise, des sources d'énergie primaires disponibles, de l'état de charge d'éventuels accumulateurs et des modules utilisés dans chaque cas.

7. Système d'alimentation en énergie (100) selon l'une des revendications précédentes, **caractérisé en ce que** les modules fonctionnels (110) présentent une forme de construction uniforme avec une empreinte au sol uniforme et/ou au moins une dimension uniforme, et/ou **en ce que** les modules fonctionnels (110) peuvent être empilés les uns sur les autres ou sont empilés les uns sur les autres.

8. Système d'alimentation en énergie (100) selon l'une des revendications précédentes, **caractérisé par** un boîtier de support destiné à recevoir les modules fonctionnels (110), les modules fonctionnels (110) pouvant être insérés dans le boîtier de support, le boîtier de support étant conçu pour relier entre eux les dispositifs d'interface (120 ; 222, 224 ; 321, 322, 323, 324) des modules fonctionnels (110).

9. Système d'alimentation en énergie (100) selon l'une des revendications précédentes, **caractérisé en ce que** le dispositif d'interface (120 ; 222, 224 ; 321, 322, 323, 324) est conçu pour relier entre eux les modules fonctionnels (110) de manière à permettre la transmission de signaux, le dispositif d'interface (120 ; 222, 224 ; 321, 322, 323, 324) étant conçu pour transmettre au module fonctionnel (110) les signaux (120 ; 222, 224 ; 321, 322, 323, 324) au module fonctionnel (110) et/ou de les transmettre à des modules fonctionnels (110) voisins.

10. Système d'alimentation en énergie (100) selon l'une des revendications précédentes, **caractérisé en ce que** le dispositif d'interface (120) comporte une partie prise (224) et une partie fiche (222) ou une partie prise (324) et une partie logement (321) dans lequel un câble électrique (323) relié au module fonctionnel (110) peut être logé ou est logé à l'aide d'une fiche (322).

11. Système d'alimentation en énergie (100) selon l'une des revendications précédentes, **caractérisé en ce que** le dispositif d'interface (120 ; 222, 224 ; 321, 322, 323, 324) est conçu pour raccorder le module fonctionnel (110) à un circuit de fluide.

12. Système d'alimentation en énergie (100) selon l'une des revendications précédentes, **caractérisé en ce que** le système d'alimentation en énergie (100) et/ou chacun des modules fonctionnels (110) comporte un dispositif de fixation destiné à fixer les modules fonctionnels (110) les uns par rapport aux autres.

13. Système d'alimentation en énergie (100) selon l'une des revendications précédentes, **caractérisé en ce que** chacun des modules fonctionnels (110) comporte un dispositif de commande, lequel est conçu pour commander le fonctionnement du système d'alimentation en énergie (100) via le dispositif d'interface (120 ; 222, 224 ; 321, 322, 323, 324) du module fonctionnel (110) et/ou le dispositif d'interface (120 ; 222, 224 ; 321, 322, 323, 324) d'au moins un autre module fonctionnel (110).
